# EUROPEAN PATENT APPLICATION

(11) **EP 3 865 781 A1**
(43) Date of publication of application: **18.08.2021**
(21) Application number: 20216018.0
(22) Date of filing: 21.12.2020
(51) Int. Cl.: F24F 11/46, F24F 11/49, F24F 11/50, F24F 11/66, F24F 110/10, F24F 110/20, F24F 110/40, F24F 110/66, F24F 110/70, F24F 120/10

(54) **A CONTROL SYSTEM AND A METHOD FOR CONTROLLING INDOOR ENVIRONMENTAL CONDITIONS**

(30) Priority: 12.02.2020 FI 20205143
(71) Applicant: Helvar Oy Ab, 02150 Espoo (FI)
(72) Inventor: JUSLÉN, Henri, 02150 Espoo (FI); NASIR, Omar, 02150 ESPOO (FI)
(74) Representative: Väänänen, Janne Kalervo

(57) **Abstract**

A control system for controlling environmental conditions prevailing in a building comprises one or more presence sensors (101) for producing occupancy data indicative of physical activity in the building and a data processing system (102) for controlling a building service system related to the environmental conditions based on: i) the occupancy data and ii) a control model for producing, based on the occupancy data, control actions to be directed to the building service system. The control system further comprises environmental sensors (104) for measuring the environmental conditions. The data processing system is configured to verify and/or tune the control model based on the measured environmental conditions and on requirements related to the environmental conditions. As the building service system is controlled based on the occupancy data, the environmental sensors can be battery-powered devices which are used only when there is a need to verify and/or tune the control model.

## Description

### Field of the disclosure

The disclosure relates to a control system for controlling indoor environmental conditions prevailing in a building. The control system can be configured to control for example a heating, ventilation, and air conditioning "HVAC" system of a building. Furthermore, the disclosure relates to a method and to a data processor program for controlling indoor environmental conditions prevailing in a building.

### Background

Heating, ventilation, and air conditioning "HVAC" is a technology for indoor environmental comfort. The goal of the HVAC is to provide thermal comfort and acceptable indoor air quality. The HVAC is an important part of buildings such as single family homes, apartment buildings, hotels and senior living facilities, medium to large industrial and office buildings such as skyscrapers and hospitals where safe and healthy indoor environmental conditions are regulated with respect to temperature, carbon dioxide CO₂, volatile organic compounds "VOC", and humidity, using fresh air from outdoors.

In intelligent buildings, a HVAC system can be controlled in area-by-area basis, e.g. room-by-room basis. However, input data is needed for an individual area-specific control. One option is to use environmental sensors for measuring air quality in areas having an individual area-specific control. The environmental sensors can be for example CO₂ sensors and/or VOC sensors. A challenge related to CO₂ and VOC sensors is that CO₂ and VOC measurements require a quite lot of energy. Therefore, battery-powered CO₂ and VOC sensors, and especially the batteries therein, have a limited lifetime, which limits the usability of these sensors for controlling a HVAC system. On the other hand, battery-powered sensors are lower cost, easier to install, and can be positioned more freely than corresponding mains-powered sensors.

One alternative is to use occupancy data and/or occupancy predictions to control a HVAC system. The occupancy data can be produced with presence sensors such as for example passive infrared "PIR" sensors for detecting presence through motion, thermal cameras, low-resolution optical cameras, gigahertz-radars, sound sensors, pressure sensors e.g. in chairs, and occupant counters configured to monitor traffic through doors. A drawback related to use of the occupancy data and/or occupancy predictions in a control of a HVAC system is that it is challenging to determine, for example, which level of occupancy requires increased ventilation in a certain space.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts in a simplified form as a prelude to a more detailed description of exemplifying embodiments of the invention.

In accordance with the invention, there is provided a new control system for controlling environmental conditions prevailing in a building. The control system can be configured to control for example a heating, ventilation, and air conditioning "HVAC" system of a building. A control system according to the invention comprises:
- one or more presence sensors for producing occupancy data indicative of physical activity in one or more areas of the building,
- a data processing system for controlling a building service system, e.g. a HVAC system, related to the environmental conditions based on: i) the occupancy data and ii) a control model for producing, based on the occupancy data, control actions to be directed to the building service system, and
- one or more environmental sensors, e.g. CO₂ sensors and/or VOC sensors, for measuring the environmental conditions.

The above-mentioned data processing system is configured to compare the measured environmental conditions to requirements related to the environmental conditions in order to verify the above-mentioned control model.

In a control system according to an exemplifying and advantageous embodiment, the data processing system is further configured to tune the control model with the aid of the measured environmental conditions to respond better to the requirements related to the environmental conditions. In this exemplifying case, the measured environmental conditions can be used for e.g. training the control model during a commissioning phase of the control system.

As the building service system, e.g. a HVAC system, is controlled based on the occupancy data, the environmental sensors can be for example battery-powered devices which are used only when there is a need to verify and/or tune and/or train the control model. Furthermore, the verified control model eliminates or at least mitigates challenges such as how determine which level of occupancy in a certain area of a building requires increased ventilation.

In accordance with the invention, there is provided also a new building management system that comprises:
- a lighting system comprising luminaires and one or more presence sensors for controlling the luminaires, and
- a control system according to the invention for controlling a building service system, e.g. a HVAC system, related to environmental conditions prevailing in a building.

The one or more presence sensors of the lighting system are used also as the one or more presence sensors of the control system. Therefore, the control system can be cost effectively implemented in conjunction with a lightning system of the kind mentioned above.

In accordance with the invention, there is provided also a new method for controlling environmental conditions prevailing in a building. A method according to the invention comprises:
- receiving, from one or more presence sensors, occupancy data indicative of physical activity in one or more areas of the building,
- controlling a building service system related to the environmental conditions based on: i) the occupancy data and ii) a control model for producing, based on the occupancy data, control actions to be directed to the building service system,
- measuring the environmental conditions with one or more environmental sensors, and
- comparing the measured environmental conditions to requirements related to the environmental conditions in order to verify the control model.

In accordance with the invention, there is provided also a new data processor program for controlling environmental conditions prevailing in a building. A data processor program according to the invention comprises instructions for controlling a programmable data processor to:
- receive, from one or more presence sensors, occupancy data indicative of physical activity in one or more areas of the building,
- control a building service system related to the environmental conditions based on: i) the occupancy data and ii) a control model for producing, based on the occupancy data, control actions to be directed to the building service system,
- receive, from one or more environmental sensors, measurement data indicative of the environmental conditions, and
- compare the measurement data to requirements related to the environmental conditions in order to verify the control model.

The above-mentioned data processor program can be called a computer program provided that a computer is understood in a broad sense so that e.g. a programmable router or another programmable device is deemed to be a computer.

In accordance with the invention, there is provided also a new data processor program product. The data processor program product comprises a non-volatile data processor readable medium encoded with a data processor program according to the invention.

Exemplifying and non-limiting embodiments are described in accompanied dependent claims.

Various exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of also un-recited features.

The features recited in dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments and their advantages are explained in greater detail below with reference to the accompanying drawings, in which:
figure 1 illustrates a control system according to an exemplifying and non-limiting embodiment for controlling environmental conditions prevailing in a building,
figure 2 illustrates a control system according to an exemplifying and non-limiting embodiment for controlling environmental conditions prevailing in a building, and
figure 3 shows a flowchart of a method according to an exemplifying and non-limiting embodiment for controlling environmental conditions prevailing in a building.

### Description of exemplifying and non-limiting embodiments

The specific examples provided in the description below should not be construed as limiting the scope and/or the applicability of the accompanied claims. Lists and groups of examples provided in the description below are not exhaustive unless otherwise explicitly stated.

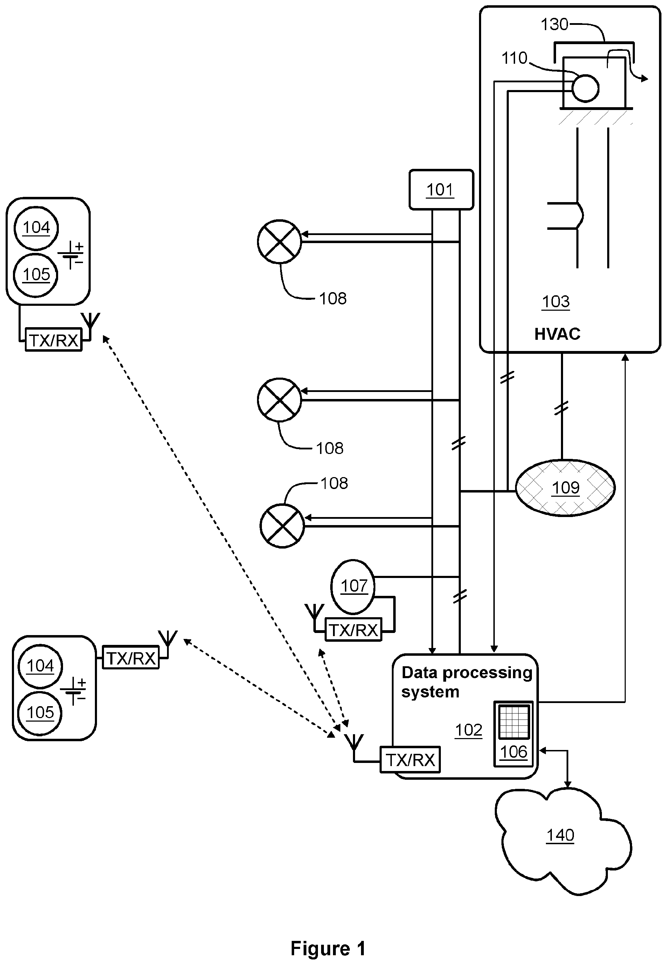

Figure 1 illustrates a control system according to an exemplifying and non-limiting embodiment for controlling environmental conditions prevailing in a building. The control system comprises a presence sensor 101 for producing occupancy data indicative of physical activity in a room or another area of the building. The presence sensor 101 may comprise for example a passive infrared "PIR" sensor for detecting presence through motion, a thermal camera, a low-resolution optical camera, a gigahertz-radar, a sound sensor, a pressure sensor e.g. in chairs, and/or an occupant counter for monitoring traffic through a door. In this exemplifying case, the presence sensor 101 is a mains-powered device that receives electric energy from a power grid 109. The presence sensor 101 is communicatively connected to a data processing system 102 that is configured to control a building service system 103. The building service system 103 can be for example a heating, ventilation, and air conditioning "HVAC" system of the building. The data processing system 102 is configured to control the building service system 103 based on: i) the occupancy data and ii) a control model that produces, based on the occupancy data, control actions to be directed to the building service system 103. The control actions may comprise for example: turning a ventilation on and turning the ventilation off. The control model may comprise for example limit values for a physical activity level expressed by the occupancy data so that a given one of the above-mentioned control actions is carried out when the physical activity level exceeds or falls below a corresponding limit value. For another example, a control action may comprise adjusting a volume of the ventilation in accordance with the physical activity level, a rate of change of the physical activity level, and/or a time-integral of the physical activity level. In this exemplifying case, the control model may comprise for example weight coefficients such that the volume of the ventilation is given as a weighted sum of the physical activity level, a rate of change of the physical activity level, and a time-integral of the physical activity level. In this exemplifying case, the control model is factually a proportional, derivative, and integrative "PID" controller.

The control system comprises environmental sensors 104 for measuring environmental conditions such as e.g. amount of carbon dioxide CO₂ in air, or in other words CO₂ content, and/or amount of one or more volatile organic compounds "VOC" in the air, or in other words VOC content, and possibly inhalable particles PM10 where PM means "Particulate Matter", fine particles PM2.5, humidity, and/or temperature. The data processing system 102 is configured to verify the above-mentioned control model by comparing the measured environmental conditions to requirements related to the environmental conditions. Advantageously, the data processing system 102 is further configured to tune the control model based on the measured environmental conditions and on the requirements related to the environmental conditions. The measured environmental conditions represent feedback data with the aid of which the control model is tuned. When e.g. measured CO₂ and/or VOC contents exceed allowed maximums, the control model can be tuned by e.g. the data processing system 102 to be more aggressive to increase a ventilation in response to an increase in physical activity indicated by the occupancy data. Correspondingly, the control model can be tuned by e.g. the data processing system 102 to be less aggressive to respond to an increase in the physical activity when the measured CO₂ and/or VOC contents are much below the allowed maximums even if the physical activity is high and thus the control model is unnecessarily aggressive. A response to an increase in physical activity can be e.g. an increase in ventilation volume and/or an increase in activity time of the ventilation or some other kind of change in ventilation functionality that improves the indoor air quality. The control model can be deemed to be a control model which tunes itself if software and/or hardware means for tuning a core part of the control model are deemed to be an element of the control model.

In the exemplifying case illustrated in figure 1, the environmental sensors 104 are local-powered environmental sensors each of which comprises a local energy source and a wireless transceiver for communicating with the data processing system 102. The local energy source may comprise e.g. a battery and/or a photovoltaic cell. An advantage of the local-powered environmental sensors is that they can be positioned more freely and with lower installation costs than corresponding mains-powered environmental sensors. Furthermore, a price of a local-powered environmental sensor can be lower than that of a corresponding mains-powered environmental sensor. In a simple exemplifying case, the environmental sensors 104 are battery-powered and they are operating as long as their batteries have energy. In this exemplifying case, the measured environmental conditions e.g. measured CO₂ and/or VOC contents can be used for training the control model during a commissioning phase of the control system. After the control model has been trained, the environmental sensors 104 can be collected away.

In another exemplifying case, the environmental sensors 104 are initially active for most of the time, giving measured environmental conditions with the aid of which the control model is trained and tuned. When the control model performs well, the environmental sensors 104 can be activated less and less frequently, mainly to verify that the measured environmental conditions fulfill the requirements related to them, e.g. to verify that measured CO₂ and/or VOC contents are below their allowed maximums. In this exemplifying case, the data processing system 102 can be configured to activate and deactivate the environmental sensors 104 so that operating periods of the environment sensors 104 are shortened and correspondingly non-operating periods of the environment sensors 104 are lengthened in response to a situation in which the measured environmental conditions fulfill the requirements related to the environmental conditions. Correspondingly, the data processing system 102 can be configured to lengthen the operating periods of the environment sensors 104 and shorten the non-operating periods of the environment sensors 104 in response to a situation in which the measured environmental conditions do not fulfill the requirements.

In a control system according to an exemplifying and non-limiting embodiment, the data processing system 102 is configured to change operating parameters of the environmental sensors 104 via a data transfer system between the data processing system 102 and the environmental sensors 104. In an exemplifying case, the data processing system 102 is configured to change the operating parameters via a wireless data transfer system. The operating parameters may determine for example one or more of the following:
i) which environmental conditions are measured, e.g. CO₂ content, VOC content, temperature, and/or air humidity,
ii) what measured data is communicated to the data processing system 102 e.g. all the measured data or only some of it,
iii) when the measurement data is communicated e.g. how often, regularly, or unregularly e.g. only when a change of a value exceeds a reporting limit, e.g. send a CO₂ content value only if it is changing rapidly, for example by at least 100ppm between measurements or send a temperature value if it is less than 19°C or more than 23°C, and/or
iv) operating activity e.g. operating all the time, operating intermittently, or being in a listen only and sleep -cycle.

The data processing system 102 can control for example the power consumption of the environmental sensors by controlling operating parameters of the kind mentioned above. In conjunction with battery operated environmental sensors, it is advantageous that the power consumption can be controlled and thereby the operation of the environmental sensors can be optimised. Especially, the above-mentioned listen only and sleep -cycle is a battery saving mode. An environmental sensor can be in a sleep mode for example 10 minutes, then in a listen only mode for e.g. 1 minute and only if certain activation message comes during that time, go to an active mode. It is also possible that the environmental sensor is in the sleep mode for e.g. 10 minutes, then in the active mode doing measurements and sending the results as well as listening, and possibly repeating other messages sent by other environmental sensors, at the same time. The sleep mode can be for example such that only an internal clock of the environmental sensor is using battery, and thereby the power consumption in the sleep mode is low.

In a control system according to an exemplifying and non-limiting embodiment, the data processing system 102 is configured to receive, from the building service system 103, a signal indicative of quality of exhaust air exiting the building. The data processing system 102 is configured to activate the environmental sensors 104 in response to a situation in which the quality of the exhaust air does not fulfill a predetermined requirement. In the exemplifying case illustrated in figure 1, a roof ventilator 130 of the building service system 103 is provided with a sensor 110 that can be e.g. a CO₂ and/or VOC sensor. For example, a high CO₂ content and/or a high VOC content in the exhaust air indicates an insufficient ventilation and thereby a need to tune the control model with the aid of CO₂ and/or VOC contents measured with the environment sensors 104.

In a control system according to an exemplifying and non-limiting embodiment, the data processing system 102 is configured to activate the environmental sensors 104 in response to a situation in which a change in the occupancy data indicates a need to verify the control model and, depending on the verification result, a need to tune the control model. For example, a big increase in physical activity expressed by the occupancy data may correspond to a new situation which differs significantly from earlier situations during which the control model has been trained and tuned. Thus, the reliability of the control model can be questionable in the new situation and thereby there is a need to verify the control model and, depending on the verification result, a need to tune the control model.

The exemplifying control system illustrated in figure 1 comprises auxiliary sensors 105 each of which can be configured to measure for example air humidity, air temperature, and/or air pressure. In the exemplifying case shown in figure 1, the auxiliary sensors 105 and the environmental sensors 104 are implemented in same sensor modules, but it is also possible that that the auxiliary sensors 105 are separate devices with respect to the environmental sensors 104. In an exemplifying case in which the environmental sensors 104 are CO₂ and/or VOC sensors and the auxiliary sensors 105 are air humidity and/or temperature sensors, power consumption of the auxiliary sensors 105 is lower than that of the environmental sensors 104. An exemplifying way to utilize the lower power consumption of the auxiliary sensors 105 is such that the auxiliary sensors 105 are operating constantly or at least more often than the environmental sensors 104, and the data processing system 102 is configured to activate the environmental sensors 104 in response to a situation in which data received from the auxiliary sensors 105 indicates a change in the environmental conditions that causes a need to verify the control model and, depending on the verification result, a need to tune the control model. For example, a significant increase in air humidity and/or temperature is typically a symptom of an insufficient ventilation and thereby it can be used as an indicator of a need to tune the control model.

The exemplifying control system illustrated in figure 1 comprises a mains-powered sensor 107 for measuring the environmental conditions such as e.g. CO₂ and/or VOC contents. An inherent advantage of the mains-powered sensor 107 is that its operating time is not limited as long as electricity is available from the power grid 109. A disadvantage of the mains-powered sensor 107 is that it cannot be positioned as freely and with as low installation costs as a corresponding local-powered, e.g. battery-powered, environmental sensor. An exemplifying way to utilize the practically unlimited operating time of the mains-powered sensor 107 is such that the mains-powered sensor 107 is operating constantly or at least more often than the environmental sensors 104, and the data processing system 102 is configured to activate the environmental sensors 104 in response to a situation in which data received from the mains-powered sensor 107 indicates a change in the environmental conditions that causes a need to verify the control model and, depending on the verification result, a need to tune the control model. For example, a significant increase in CO₂ and/or VOC contents measured with the mains-powered sensor 107 is a symptom of insufficient ventilation and thereby it can be used as an indicator of a need to tune the control model.

In the exemplifying control system illustrated in figure 1, the data processing system 102 comprises a user interface 106 which enables users to give feedback on the comfort level. An exemplifying way to utilize the feedback is such that the data processing system 102 is configured to activate the environmental sensors 104 in response to a situation in which the feedback manifests a low comfort level. Feedback manifesting a low comfort level is a symptom of an insufficient ventilation and/or inconvenient temperature and thereby it can be used as an indicator of a need to tune the control model. The user interface 106 can be configured to enable the users to give specifying feedback which specifies in which respects the comfort level is good and correspondingly weak, and the processing system 102 can be configured to tune the control model based on the specifying feedback.

A benefit of the control system where the building service system 103 is controlled with the occupancy data and with the control model is that the control can be made proactive because air quality does not worsen immediately when physical activity increases. Thus, the occupancy data acts as a predictor that anticipates a worsening of air quality unless nothing is done. Instead, measured environmental conditions such as e.g. measured CO₂ and/or VOC contents show that the air quality is bad only after the air quality has worsened. Furthermore, the control system that uses the occupancy data and the control model is not so sensitive to air quality measurement errors than control systems based on air quality measurements only.

In a control system according to an exemplifying and non-limiting embodiment, the data processing system 102 is configured to run a prediction model for predicting occupancy activity based on pre-stored usage profile data and/or earlier measured occupancy data. The pre-stored usage profile data may comprise e.g. data that describes a typical usage of the building at different times e.g. in different hours of a day, on different days of a week or a month, etc. The predicted occupancy activity can be used together with the occupancy data measured with the one or more presence sensors.

In the exemplifying case illustrated in figure 1, the presence sensor 101 is communicatively connected to luminaires 108 of a lighting system of the building. In this exemplifying case, the presence sensor 101 is connected to the data processing system 102 and to the luminaires 108 with corded links, but it is also possible to use wireless data transfer between the presence sensor 101, the data processing system 102, and/or the luminaires 108. The presence sensor 101 is configured to control the luminaires 108 for example so that the luminaires 108 are turned and kept on when a presence is detected and turned off after a certain time of no presence detections. This allows to provide good lighting and to save energy, because the lights are on only when needed. In the exemplifying case illustrated in figure 1, the presence sensor 101 is not only a part of the control system for controlling the building service system 103 but also a part of the lighting system of the building, which provides costs savings.

In the exemplifying case illustrated in figure 1, the presence sensor 101 controls all the luminaires 108 in a centralized way, but it is also possible that practically every luminaire is provided with a dedicated presence sensor. An example of a lighting system that comprises a dedicated presence sensor for practically every luminaire is a system where each luminaire is controlled based on a presence sensor output as well as based on messages received from nearby luminaires. This makes it possible that the lighting system is proactive so that a given luminaire is turned on prior to a user enters an area illuminated by the luminaire under consideration. Output signals of one or more of the presence sensors of the above-mentioned lighting system can be used in a control system according to an embodiment of the invention for controlling a building service system e.g. a HVAC system.

In the exemplifying case illustrated in figure 1, the lighting system comprises a data transfer network which communicatively interconnects the luminaires 108, the presence sensor 101, and the data processing system 102. In this exemplifying case, the data transfer network of the lighting system is a corded link network, but it is also possible that the data transfer network of the lighting system is a wireless data transfer network such as e.g. a Bluetooth Low Energy "BLE" network, a Zigbee network, or a Thread network. Power supply to the presence sensor 101 can be arranged with a separate power line or using wires of the corded link network. For example, the Power over Ethernet "PoE" technology can be used for supplying power via the corded link network. The control system comprises a wireless data transfer network which communicatively interconnects the environmental sensors 104 and the data processing system 102. In an exemplifying case where the data transfer network of the lighting system is a wireless data transfer network, the data transfer network of the lighting system can be used also for transferring data to and from the environmental sensors 104. In this exemplifying case, wireless transceivers of the environmental sensors 104 are advantageously run in a mode where they listen and transmit data generated by the environmental sensors 104 but do not act as repeaters which forward messages not destined for the environmental sensors 104.

In the exemplifying control system illustrated in figure 1, the data processing system 102 is a centralized device. It is however also possible that the data processing system is implemented in a distributed way in communicatively interconnected devices. Furthermore, it is also possible that at least a part of functionalities of the data processing system is implemented in a cloud 141 connected to other parts of the control system via one or more gateway devices. For example, verification of the control model can be carried out in a local device whereas tuning the control model, which is typically a more complex operation than the verification, can be carried out in the cloud 140.

In exemplifying cases in which the control system is mainly a part of e.g. a lighting system or another system other than a building service system, the data processing system 102 is advantageously configured to store and/or receive information that expresses that the control system is used also for controlling a building service system. Furthermore, the data processing system 102 is advantageously configured to receive data that expresses how other entities have possibly controlled the building service system. This data is advantageously used when tuning the control model in order to avoid a situation in which another entity controls the building service system so that the indoor air quality is good enough and thereby data processing system 102 deems erroneously that there is no need to tune the control model.

The data processing system 102 shown in figure 1 can be implemented with one or more data processors each of which can be a programmable data processor provided with an appropriate software, a dedicated hardware data processor such as for example an application specific integrated circuit "ASIC", and/or a configurable hardware data processor such as for example a field programmable gate array "FPGA". Furthermore, the data processing system 102 may comprise one or more memory devices such as e.g. a random-access memory "RAM" circuit. Correspondingly, a distributed data processing system can be implemented with data processors and memory devices placed in communicatively interconnected devices.

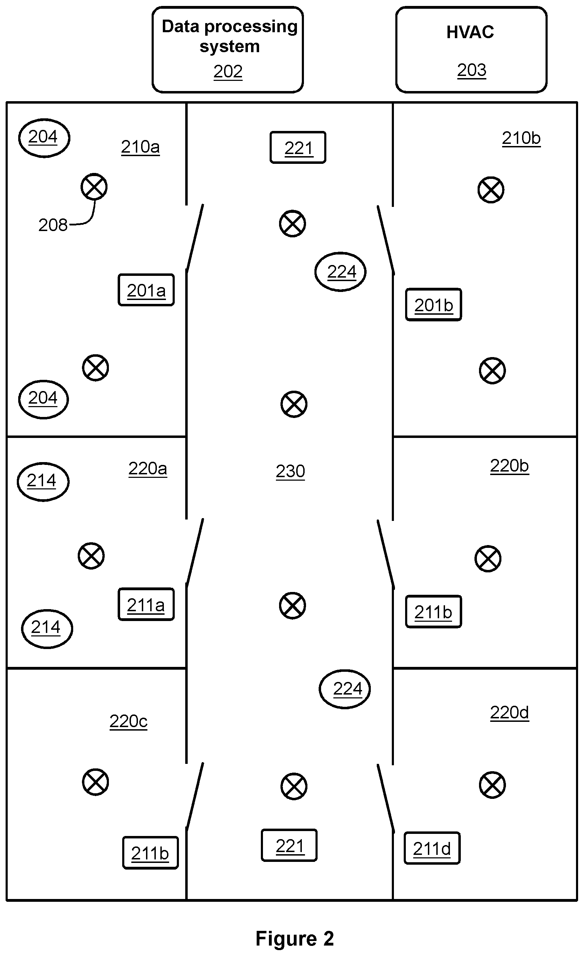

Figure 2 illustrates a control system according to an exemplifying and non-limiting embodiment for controlling environmental conditions prevailing in a building. In this exemplifying case, the building comprises areas 210a, 210b, 220a, 220b, 220c, 220d, and 230. The control system comprises presence sensors 201a, 201b, 211a, 221b, 221c, 221d, and 224 for producing occupancy data indicative of physical activity in the above-mentioned areas. The presence sensors are communicatively connected to a data processing system 202 that is configured to control a building service system 203. The building service system 203 can be for example a HVAC system of the building. The data processing system 202 is configured to control the building service system 203 based on: i) the occupancy data and ii) a control model that produces, based on the occupancy data, control actions to be directed to the building service system 203. In this exemplifying case, we assume that the building service system 203 comprises means for individually controlling the environmental conditions prevailing in the above-mentioned areas of the building.

In a control system according to an exemplifying and non-limiting embodiment, the data processing system 202 is configured to store data expressing classification of the above-mentioned areas 210a, 210b, 220a-220d, and 230 into groups so that the areas of each group are like each other. For example, the areas of a given group may have a same size and a same purpose of use. In the exemplifying case shown in figure 2, the areas 210a and 210b constitute a group of large meeting rooms, the areas 220a-220d constitute a group of small meeting rooms, and the area 230 is considered to constitute a group of corridors even if this group has only one member. The control model comprises group-specific parts so that the control model has a part for the group of large meeting rooms, a part for the group of small meeting rooms, and a part for the group of corridors. The data processing system 202 is configured to control the building service system 203 to regulate the environmental conditions prevailing in each area of the building based on: i) a part of the occupancy data indicative of the physical activity in the area under consideration and ii) the group-specific part of the control model associated to the group containing the area under consideration. The control system comprises environmental sensors 204, 214, and 224 for measuring environmental conditions such as e.g. CO₂ and/or VOC contents. The environmental sensors 204 are arranged to measure the environmental conditions in the area 210a, the environmental sensors 214 are arranged to measure the environmental conditions in the area 220a, and the environmental sensors 224 are arranged to measure the environmental conditions in the area 230. The data processing system is configured to tune each group-specific part of the control model based on the following: i) the environmental conditions measured in one of the areas of the group under consideration and ii) the requirements related to the environmental conditions. In the exemplifying case shown in figure 2, the group-specific part relating to the group of large meeting rooms is tuned based on the environmental conditions measured in the area 210a, the group-specific part relating to the group of small meeting rooms is tuned based on the environmental conditions measured in the area 220a, and the group-specific part relating to the group of corridors is tuned based on the environmental conditions measured in the area 230. The above-described technology where a same group-specific part of the control model is used for all areas, such as e.g. the areas 220a-220b, of the group under consideration is based on an assumption that the areas of the group are like each other from the viewpoint of controlling the environmental conditions.

In a control system according to another exemplifying and non-limiting embodiment, each of the areas 210a, 210b, 220a-220d, and 230 has its own area-specific part of the control model that is verified, trained, and/or tuned with the aid of environmental conditions measured in the area under consideration. In this exemplifying case, each area is provided with one or more environmental sensors such as e.g. CO₂ and/or VOC sensors.

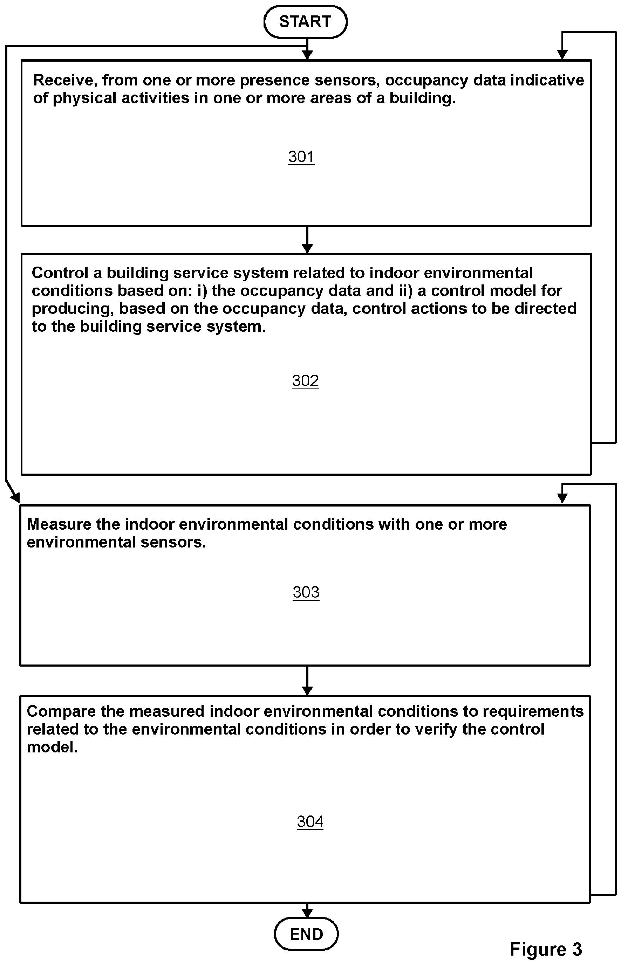

Figure 3 shows a flowchart of a method according to an exemplifying and non-limiting embodiment for controlling environmental conditions prevailing in a building. The method comprises the following actions:
- action 301: receiving, from one or more presence sensors, occupancy data indicative of physical activity in one or more areas of the building,
- action 302: controlling a building service system, e.g. a HVAC system, related to the environmental conditions based on: i) the occupancy data and ii) a control model for producing, based on the occupancy data, control actions to be directed to the building service system,
- action 303: measuring the environmental conditions with one or more environmental sensors, and
- action 304: comparing the measured environmental conditions to requirements related to the environmental conditions in order to verify the control model.

A method according to an exemplifying and non-limiting embodiment comprises tuning the control model based on the measured environmental conditions and on the requirements related to the environmental conditions.

A method according to an exemplifying and non-limiting embodiment comprises activating and deactivating the one or more environmental sensors so that operating periods of the one or more environment sensors are shortened and non-operating periods of the one or more environment sensors are lengthened in response to a situation in which the measured environmental conditions fulfill the requirements related to the environmental conditions.

A method according to an exemplifying and non-limiting embodiment comprises receiving, from the building service system, a signal indicative of quality of exhaust air exiting the building, and activating the one or more environmental sensors in response to a situation in which the quality of the exhaust air does not fulfil a predetermined requirement.

A method according to an exemplifying and non-limiting embodiment comprises activating the one or more environmental sensors in response to a situation in which a change of the occupancy data indicates a need to verify the control model and, depending on the verification result, a need to tune the control model.

A method according to an exemplifying and non-limiting embodiment comprises storing data expressing classification of the areas of the building into groups associated to group-specific parts of the control model, and controlling the building service system to regulate the environmental conditions prevailing in each area of the building based on: i) a part of the occupancy data indicative of physical activity in the area under consideration and ii) the group-specific part of the control model associated to the group containing the area under consideration.

A method according to an exemplifying and non-limiting embodiment comprises tuning each group-specific part of the control model based on the following: i) the environmental conditions measured in one of the areas of the group under consideration and ii) the requirements related to the environmental conditions.

In a method according to an exemplifying and non-limiting embodiment, each of the one or more environmental sensors is configured to measure carbon dioxide and/or one or more volatile organic compounds.

A method according to an exemplifying and non-limiting embodiment comprises measuring air humidity, air temperature, and/or air pressure with one or more auxiliary sensors. The method according to this exemplifying and non-limiting embodiment further comprises activating the one or more environmental sensors in response to a situation in which data received from the one or more auxiliary sensors indicates a change of the environmental conditions causing a need to verify the control model and, depending on the verification result, a need to tune the control model.

In a method according to an exemplifying and non-limiting embodiment, each of the one or more environmental sensors is a local-powered environmental sensor that comprises a local energy source and a wireless transmitter for transmitting measured data.

A method according to an exemplifying and non-limiting embodiment comprises measuring the environmental conditions with one or more mains-powered sensors, and activating the one or more local-powered environmental sensors in response to a situation in which data received from the one or more mains-powered sensors indicates a change of the environmental conditions causing a need to verify the control model and, depending on the verification result, a need to tune the control model.

A method according to an exemplifying and non-limiting embodiment comprises changing operating parameters of the environmental sensors via a data transfer system connected to the environmental sensors.

A method according to an exemplifying and non-limiting embodiment comprises controlling power consumption of the environmental sensors by changing the operating parameters of the environmental sensors.

A data processor program according to an exemplifying and non-limiting embodiment comprises data processor executable instructions for controlling a programmable data processor to carry out actions related to a method according to any of the above-described exemplifying embodiments.

A data processor program according to an exemplifying and non-limiting embodiment comprises software modules for controlling environmental conditions prevailing in a building. The software modules comprise data processor executable instructions for controlling a programmable data processor to:
- receive, from one or more presence sensors, occupancy data indicative of physical activity in one or more areas of the building,
- control a building service system related to the environmental conditions based on: i) the occupancy data and ii) a control model for producing, based on the occupancy data, control actions to be directed to the building service system,
- receive, from one or more environmental sensors, measurement data indicative of the environmental conditions, and
- compare the measurement data to requirements related to the environmental conditions in order to verify the control model.

The above-mentioned software modules can be e.g. subroutines or functions implemented with a programming language suitable for the programmable data processor.

A data processor program product according to an exemplifying and non-limiting embodiment comprises a data processor readable medium encoded with a data processor program according to an embodiment of invention.

A signal according to an exemplifying and non-limiting embodiment is encoded to carry information defining a data processor program according to an embodiment of invention.

The specific examples provided in the description given above should not be construed as limiting the scope and/or the applicability of the appended claims. Lists and groups of examples provided in the description given above are not exhaustive unless otherwise explicitly stated.

## Claims

1. A control system for controlling environmental conditions prevailing in a building, the control system comprising:
- one or more presence sensors (101, 201a, 210b, 211a-211d, 221) configured to produce occupancy data indicative of physical activity in one or more areas (210a, 210b, 220a-220d, 230) of the building, and
- a data processing system (102, 202) configured to control a building service system (103, 203) related to the environmental conditions based on: i) the occupancy data and ii) a control model configured to produce, based on the occupancy data, control actions to be directed to the building service system,
wherein the control system further comprises one or more environmental sensors (104, 204, 214, 224) configured to measure the environmental conditions, and the data processing system is configured to compare the measured environmental conditions to requirements related to the environmental conditions in order to verify the control model.

2. A control system according to claim 1, wherein the data processing system is configured to tune the control model based on the measured environmental conditions and on the requirements related to the environmental conditions.

3. A control system according to claim 2, wherein the data processing system is configured to activate and deactivate the one or more environmental sensors so that operating periods of the one or more environment sensors are shortened and non-operating periods of the one or more environment sensors are lengthened in response to a situation in which the measured environmental conditions fulfill the requirements related to the environmental conditions.

4. A control system according to any one of claims 1-3, wherein the data processing system is configured to receive, from the building service system, a signal indicative of quality of exhaust air exiting the building, and to activate the one or more environmental sensors in response to a situation in which the quality of the exhaust air does not fulfil a predetermined requirement.

5. A control system according to any one of claims 1-4, wherein the data processing system is configured to activate the one or more environmental sensors in response to a situation in which a change of the occupancy data indicates a need to verify the control model and, depending on a verification result, a need to tune the control model.

6. A control system according to any one of claims 1-5, wherein the data processing system is configured to store data expressing classification of the areas (210a, 210b, 220a-220d, 230) of the building into groups associated to group-specific parts of the control model, and to control the building service system to regulate the environmental conditions prevailing in each area of the building based on: i) a part of the occupancy data indicative of the physical activity in the area under consideration and ii) the group-specific part of the control model associated to the group containing the area under consideration.

7. A control system according to claim 6, wherein the data processing system is configured to tune each group-specific part of the control model based on the following: i) the environmental conditions measured in one of the areas of the group under consideration and ii) the requirements related to the environmental conditions.

8. A control system according to any one of claims 1-7, wherein each of the one or more environmental sensors is configured to measure carbon dioxide and/or one or more volatile organic compounds.

9. A control system according to claim 8, wherein the control system further comprises one or more auxiliary sensors (105) each being configured to measure air humidity, air temperature, and/or air pressure, and wherein the data processing system is configured to activate the one or more environmental sensors in response to a situation in which data received from the one or more auxiliary sensors indicates a change of the environmental conditions causing a need to verify the control model and, depending on a verification result, a need to tune the control model.

10. A control system according to any one of claims 1-9, wherein each of the one or more environmental sensors (104, 204, 214, 224) is a local-powered environmental sensor that comprises a local energy source and a wireless transmitter configured to transmit measured data to the data processing system.

11. A control system according to claim 10, wherein the control system further comprises one or more mains-powered sensors (107) configured to measure the environmental conditions, and the control system is configured to activate the one or more local-powered environmental sensors in response to a situation in which data received from the one or more mains-powered sensors indicates a change of the environmental conditions causing a need to verify the control model and, depending on a verification result, a need to tune the control model.

12. A control system according to any one of claims 1-11, wherein the data processing system (102) is configured to change operating parameters of the environmental sensors (104) via a data transfer system between the data processing system (102) and the environmental sensors (104).

13. A control system according to claim 12, wherein the data processing system (102) is configured to control power consumption of the environmental sensors (104) by changing the operating parameters of the environmental sensors (104).

14. A building management system comprising:
- a lighting system comprising luminaires (108, 208) and one or more presence sensors (101, 201a, 210b, 211a-211d, 221) configured to control the luminaires, and
- a control system according to any one of claims 1-13 and configured to control a building service system (103, 103) related to environmental conditions prevailing in a building,
wherein the one or more presence sensors of the lighting system are the one or more presence sensors of the control system.

15. A method for controlling environmental conditions prevailing in a building, the method comprising:
- receiving (301), from one or more presence sensors, occupancy data indicative of physical activity in one or more areas of the building, and
- controlling (302) a building service system related to the environmental conditions based on: i) the occupancy data and ii) a control model configured to produce, based on the occupancy data, control actions to be directed to the building service system,
wherein the method further comprises measuring (303) the environmental conditions with one or more environmental sensors and comparing (304) the measured environmental conditions to requirements related to the environmental conditions in order to verify the control model.

16. A data processor program for controlling environmental conditions prevailing in a building, the data processor program comprising instructions for controlling a programmable data processor to:
- receive, from one or more presence sensors, occupancy data indicative of physical activity in one or more areas of the building, and
- control a building service system related to the environmental conditions based on: i) the occupancy data and ii) a control model configured to produce, based on the occupancy data, control actions to be directed to the building service system,
wherein the data processor program further comprises instructions for controlling the programmable data processor to receive, from one or more environmental sensors, measurement data indicative of the environmental conditions, and to compare the measurement data to requirements related to the environmental conditions in order to verify the control model.
